Europäisches Patentamt

European Patent Office

Office européen des brevets

(11) Publication number: **0 088 037**
A1

(12) **EUROPEAN PATENT APPLICATION**

(21) Application number: **83630005.3**

(22) Date of filing: **14.01.83**

(51) Int. Cl.³: **B 23 B 51/02**

(30) Priority: **24.02.82 US 351723**

(43) Date of publication of application:
**07.09.83 Bulletin 83/36**

(84) Designated Contracting States:
**FR GB SE**

(71) Applicant: **HUGHES TOOL COMPANY**
**5425 Polk Avenue**
**Houston Texas 77023(US)**

(72) Inventor: **Jenkins, James C.**
**1123 Jerome**
**Houston Texas 77009(US)**

(74) Representative: **Waxweiler, Jean et al,**
**OFFICE DENNEMEYER S.à.r.l. 21-25 Allée Scheffer**
**P.O.Box 41**
**Luxembourg(LU)**

(54) **Single pass drill.**

㉝ A drill has features to enable it to drill holes with bottoms that have flat peripheries in a single pass and with close tolerances. The drill (11) is of a twist-drill type having two helical grooves (15) extending upward along the shank (15) to a cutting tip. The cutting edge of each groove (15) is formed into two separate zones. The inner zone (21) converges to a point (25) and is formed at a neutral rake. The outer zone (19) is perpendicular to the axis (23) of the drill (11) and formed at a positive rake.

*Fig.1*

Croydon Printing Company Ltd.

EP 0 088 037 A1

# SINGLE PASS DRILL

**0088037**

This invention relates in general to drills for drilling holes in metal parts, and in particular to a drill for drilling in a single pass a close or low tolerance hole with a bottom having a flat periphery.

In manufacturing earth boring bits, large numbers of holes are drilled for receiving tungsten carbide inserts or compacts. The holes normally are cylindrical with a bottom with a flat periphery surrounding a conical depression in the center. The tungsten carbide inserts are pressed into the holes with an interference fit. The holes must be drilled within close tolerances to provide the proper amount of retention.

In the prior art, the holes are drilled by first using a conventional twist drill having a conical point and two helical flutes or grooves extending to the point. The drill is undersized about thirty thousandths. Subsequently, a reamer is used to ream the hole out to the proper diameter. The reamer normally has four helical or straight flutes or grooves and a flat cutting tip. While this two-step operation provides accurately dimensioned holes, it is time consuming and expensive.

In this invention, a drill is provided that will drill in a single pass a close tolerance hole with a bottom having a flat periphery. Reaming by the use of a reamer is thus unnecessary. The drill has two helical grooves, each of which terminates at a cutting edge. Each cutting edge has an outer zone and an inner zone. The outer zone is in a plane perpendicular to the axis of the drill for cutting a flat bottom. The inner zone extends to an apex. The surface of the groove joining the cutting edge of the outer zone contacts the workpiece at a positive rake. The surface of the groove joining the inner zone is formed to contact the workpiece at a neutral rake. The positive and neutral rakes of the inner and outer zones balance the cutting forces and provide two different chips .

Fig. 1 is a side view of a drill constructed in accordance with this invention.

Fig. 2 is a top view of the drill of Fig. 1.

Fig. 3 is another side view of the drill of Fig.1.

Fig. 4 is another side view, enlarged, of the drill of Fig. 1.

Fig. 5 is a schematic view illustrating the rake of the outer zone of the cutting edge of the drill of Fig.1.

Fig. 6 is a schematic view illustrating the rake of the inner zone of the cutting edge of the drill of Fig. 1.

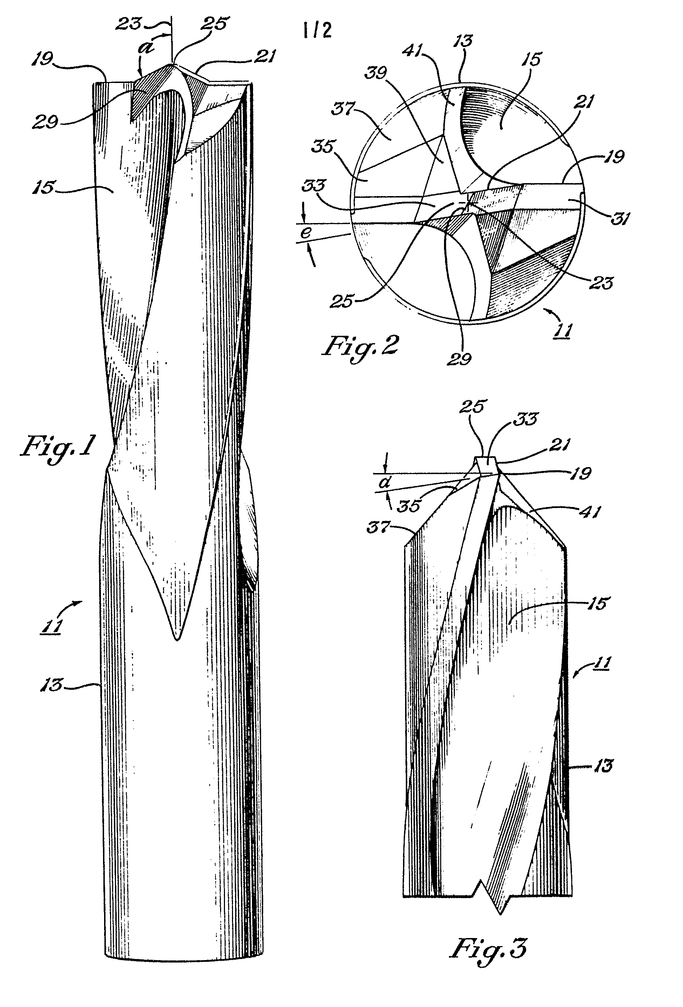

Referring to Fig.1, drill 11 has a shank 13 that is cylindrical on one end for reception within a chuck of a drill press (not shown). A pair of grooves or flutes 15 are formed in drill 11. Grooves 15 commence a selected distance above the base of shank 13 and extend in a helical or spiral nature to the cutting tip. Each groove 15 has an identical cutting edge. The cutting edge for each groove 15 includes an outer zone 19 and an inner zone 21.

As shown in Fig. 1, the cutting edge outer zone 19 of each groove 15 defines a line that is straight and lies in a plane perpendicular to the axis 23 of the drill 11. The cutting edge inner zone 21 of each groove 15 defines a straight line that slopes from the outer zone 19 to an apex 25. The cutting edge inner zone 21 of each groove 15 lies in a plane that intersects the axis 23 at an obtuse angle a of about 116 degrees. The radial width of each cutting edge inner zone 21 is about the same as the radial width of each cutting edge outer zone 19.

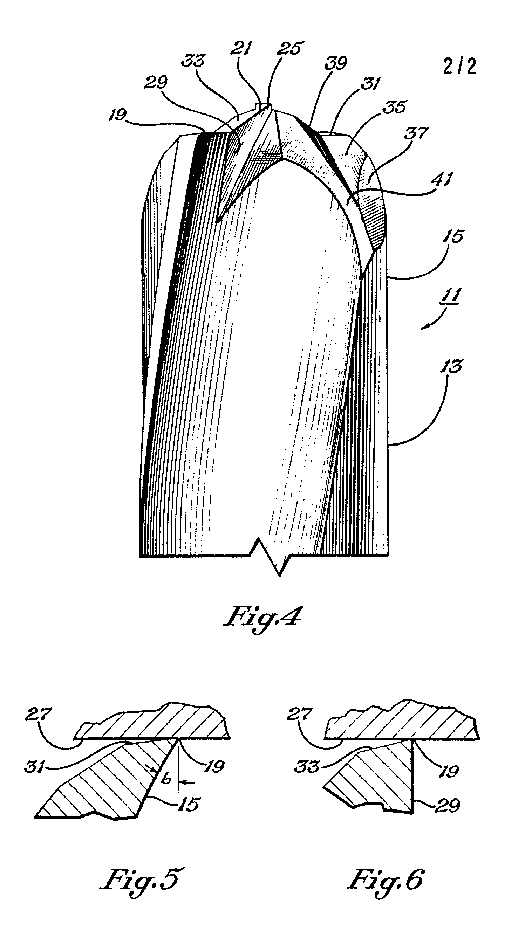

Figs. 5 and 6 indicate the rakes of the cutting edge outer zone 19 and inner zone 21 of each groove 15. The term "rake" means the angle between cutting edges inner zone 21 or outer zone 19 and a plane perpendicular to the working surface 27 to which the drill 11 is applied. An angle of zero degrees is a neutral rake, a positive angle is a positive rake, and a negative angle is a negative rake. The angle between a plane perpendicular to working surface 27 and the surface of groove 15 that forms cutting edge outer zone 19 is a positive angle b of about 15 degrees. The angle between the surface of groove 15 and a plane parallel to working surface 27 is an obtuse angle of 105 degrees. A negative rake (not shown) would place the surface of groove 15 at an acute angle with respect to a plane parallel to working surface 27.

As shown in Fig. 1 and Fig. 4, a flat region 29 parallel with axis 23 is machined in groove 15 and forms the cutting edge inner zone 21. As shown in Fig. 6, the angle between flat region 29 and a plane perpendicular to working surface 27 is zero degrees. The cutting edge outer zone 19 is thus formed at a positive rake and the cutting edge inner zone 21 at a neutral rake, which is less than the rake of the cutting edge outer zone 19 and less than a positive rake.

Referring to Fig. 2, the cutting edge outer zone 19 rotationally leads a flat region 31. Similarly, a flat region 33 follows the cutting edge inner zone 21. As shown in Fig. 3, region 31 intersects a plane perpendicular to axis 23 at an angle $d$ of about eight degrees. Region 33 intersects flat region 29 at an angle of about 82 degrees. As shown in Fig. 2, on the trailing side of the cutting edge zones 19 and 21, metal is removed in inclined areas 35, 37, 39 and 41 for clearance purposes.

Referring to Fig.2, the cutting edge inner and outer zones 21 and 19 are not on radial lines. The cutting edge outer zone 19 defines a straight line that does not intersect axis 23, rather is offset and leads the axis 23. Cutting edge outer zone 19 is parallel with the cutting edge outer zone 19 of the opposite groove 15. Cutting edge inner zone 21 defines a line that does not intersect axis 23, but is offset and leads axis 23. Each cutting edge inner zone 21 is parallel with, but does not intersect, the cutting edge inner zone 21 of the opposite groove 15. The cutting edge inner zones 21 are spaced apart from each other at apex 25 the width of flat region 33. Cutting edge inner zone 21 intersects and leads cutting edge outer zone 19 by an angle $e$ of about 15 degrees.

In operation, the drill 11 is placed in the chuck or holder of a machine spindle and brought to bear against a metal working surface 27 such as a drill bit cutter. No predrilling, drill bushings or any other preparatory procedures or devices prior to engagement of the tool into the workpiece are necessary. Initially, the cutting edge inner zones 21 will engage the working surface 27 and begin drilling a conical hole.

Subsequently, the cutting edge outer zone 19 will contact the working surface 27, drilling a cylindrical hole with an annular flat bottom surrounding the conical hole formed by the inner zones 21. As shown in Figs.5 and 6, the cutting edge outer and inner zones 19 and 21 engage the working surface 27 at positive and neutral rakes, respectively. This changes the formation of chips as they are separated from the working surface into two different chips that are easily ejected from the hole.

The resulting hole is cylindrical with a bottom having a flat periphery normal to the axis of the hole and surrounding a conical depression. The radius of the conical depression is about the same as the radial width of the flat periphery. Inserts (not shown) of tungsten carbide are then pressed into the holes. Each insert has a base with a cylindrical exterior and a flat bottom. The bottom of the insert contacts and is supported by the flat periphery of the hole bottom.

The invention has significant advantages. The drill forms a close tolerance cylindrical hole with a flat periphery on the bottom. This avoids a second operation of reaming, thus saving greatly in the expense of manufacturing articles with precision holes.

While the invention has been shown in only one of its forms, it should be apparent to those skilled in the art that it is not so limited but is susceptible to various changes without departing from the scope of the invention.

CLAIMS:

1. A drill, comprising a shank having a pair of helical grooves, each terminating at a cutting edge, characterized in that each cutting edge has an outer zone formed at a positive rake and lying in a plane perpendicular to the axis of the drill, and that each cutting edge has an inner zone that slopes to an apex and is formed at a rake that is less than the rake of the outer zone.

2. A drill, according to claim 1, characterized in that the inner zone of each cutting edge is formed at a less than positive rake.

3. A drill according to claim 1 characterized in that the inner zone of each cutting edge is formed at a neutral rake.

4. A drill for drilling holes in a working surface, comprising a shank having a pair of helical grooves on opposite sides, characterized in that each groove terminates in a cutting edge that has an inner zone and an outer zone; the cutting edge outer zone of each groove being straight and lying in a plane perpendicular to the axis of the drill bit, the surface of each groove immediately joining the cutting edge outer zone being inclined so that it is at a positive angle with a plane perpendicular to the working surface; the cutting edge inner zone of each groove being straight and sloping to define an apex, the surface of each groove immediately joining the cutting edge inner zone being formed to be in a plane perpendicular to the working surface.

5. A drill according to claim 4, characterized by a line extending along the outer zone of the cutting edge of each groove being straight, perpendicular and offset to the axis of the drill, and being parallel with a line extending along the cutting edge of the outer zone of the other groove, the surface of each groove forming the outer zone of the cutting edge being formed to be at said positive angle with respect to a plane perpendicular to the working surface; and a line extending along the inner zone of the cutting edge of each groove being straight and extending from the outer zone of the cutting edge of the same groove to an apex, the inner zone of the cutting edge leading the cutting edge of the outer zone of the same groove, the surface of each groove joining the inner zone of the cutting edge being parallel with the axis of the drill, the inner zones of the cutting edges of the grooves being parallel with each other.

*Fig.1*

*Fig.2*

*Fig.3*

Fig.4

Fig.5

Fig.6

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| Y | TECHNISCHE RUNDSCHAU, vol. 63, no. 51, December 1971, Bern, K. HÄUSER "Anschliffe der Wendelbohrer (Spiralbohrer)", pages 24-27, 29-30 * Page 25; Figures 65, 66 * | 1,4 | B 23 B 51/02 |
| Y | US-A-3 779 664 (CALEY et al.) * Column 1, lines 33-38; column 3, lines 3-67; figures 1-3 * | 1,4 | |
| Y | GB-A-1 144 035 (LOCKHEED AIRCRAFT CORP.) * Claim 1; page 2, lines 9-29; figures 1-5 * | 1,4 | |
| A | US-A-2 778 252 (OXFORD) * Column 3, lines 1-59; figures 1-3 * | 1,4 | TECHNICAL FIELDS SEARCHED (Int. Cl. ³) |
| A | US-A-3 592 555 (MACKEY) | | B 23 B 51/00 B 24 B 3/00 |

The present search report has been drawn up for all claims

| Place of search | Date of completion of the search | Examiner |
|---|---|---|
| BERLIN | 18-05-1983 | MARTIN A E W |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82